# EUROPEAN PATENT APPLICATION

(11) **EP 4 624 854 A1**
(43) Date of publication of application: **01.10.2025**
(21) Application number: 23926408.8
(22) Date of filing: 02.11.2023
(51) Int. Cl.: F28D 9/00, F25B 1/00, B60H 1/32, F25B 41/40

(54) **MANIFOLD**

(30) Priority: 08.03.2023 JP 2023035805
(71) Applicant: AISIN CORPORATION, Kariya-shi, Aichi 448-8650 (JP)
(72) Inventor: SASAKI, Yu, Kariya-shi, Aichi 448-8650 (JP)
(74) Representative: Kramer Barske Schmidtchen Patentanwälte PartG mbB
(86) International application number: PCT/JP2023/039673
(87) International publication number: WO 2024/185200

(57) **Abstract**

A manifold includes a flow path housing including a fluid flow path in which a first fluid circulates, in which an opening through which an inflow pipe and an outflow pipe in which a second fluid that exchanges heat with the first fluid in a heat exchanger circulates are inserted together is formed in the flow path housing, and the opening functions as a heat insulating space.

## Description

### TECHNICAL FIELD

The present disclosure relates to a manifold.

### BACKGROUND ART

A system related to thermal management such as an air-conditioning system of a vehicle is known (refer, for example, to Patent Literature 1). Patent Literature 1 discloses a thermal management system including a compressor that compresses low-temperature refrigerant vapor in a subsystem into high-temperature refrigerant vapor.

### CITATIONS LIST

### PATENT LITERATURE

Patent Literature 1: JP 2011-255879 A

### SUMMARY OF INVENTION

### TECHNICAL PROBLEMS

In a thermal management system disclosed in Patent Literature 1, for example, when a high-temperature flow path in which high-temperature refrigerant vapor compressed by a compressor circulates and a low-temperature flow path in which low-temperature refrigerant vapor circulates are disposed close to each other, heat exchange might occur between the high-temperature refrigerant and the low-temperature refrigerant. As a result, performance of a refrigerant circuit forming an air-conditioning system deteriorates.

The present disclosure has been made in view of the above problems, and provides a manifold that suppresses heat exchange between cooling fluids at different temperatures.

### SOLUTIONS TO PROBLEMS

A manifold according to the present disclosure is characterized in including a flow path housing including a fluid flow path in which a first fluid circulates, in which an opening through which an inflow pipe and an outflow pipe in which a second fluid that exchanges heat with the first fluid in a heat exchanger circulates are inserted together is formed in the flow path housing, and the opening functions as a heat insulating space.

According to this configuration, the opening functioning as the heat insulating space is provided in the flow path housing including the fluid flow path in which the first fluid circulates. Temperature of the first fluid changes in the process of circulating in the fluid flow path; however, according to this configuration, since the flow path housing is provided with the opening as the heat insulating space, heat exchange between the first fluids at different temperatures can be suppressed.

### BRIEF DESCRIPTION OF DRAWINGS

FIG. 1 is a diagram illustrating a refrigerant circuit according to an embodiment.
FIG. 2 is a diagram illustrating a manifold and the vicinity thereof according to the embodiment.
FIG. 3 is a diagram of the manifold illustrated in FIG. 2 as seen in another direction.

### DESCRIPTION OF EMBODIMENTS

Hereinafter, a manifold according to an embodiment of the present disclosure is described with reference to the drawings. Note that, the present invention is not limited to the following embodiment, and various modifications can be made without departing from the gist of the present invention.

### [Refrigerant Circuit]

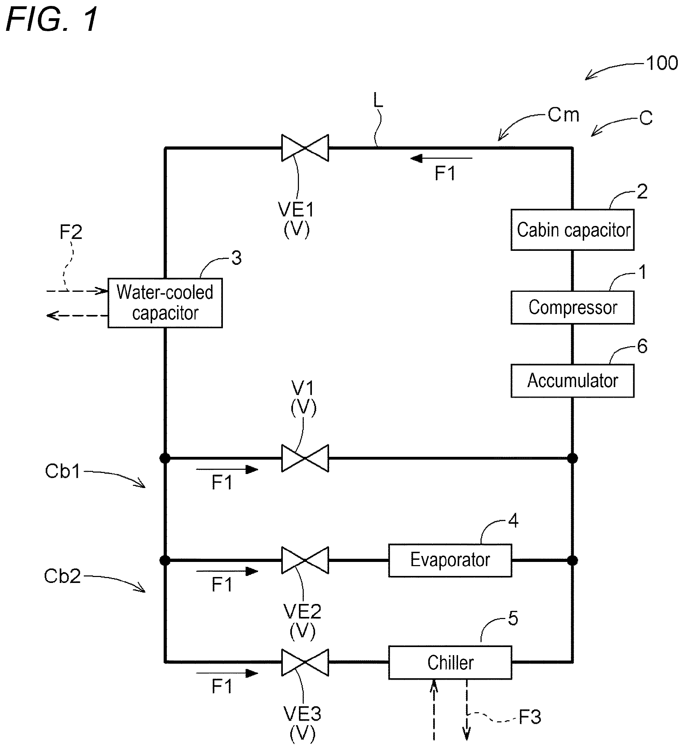

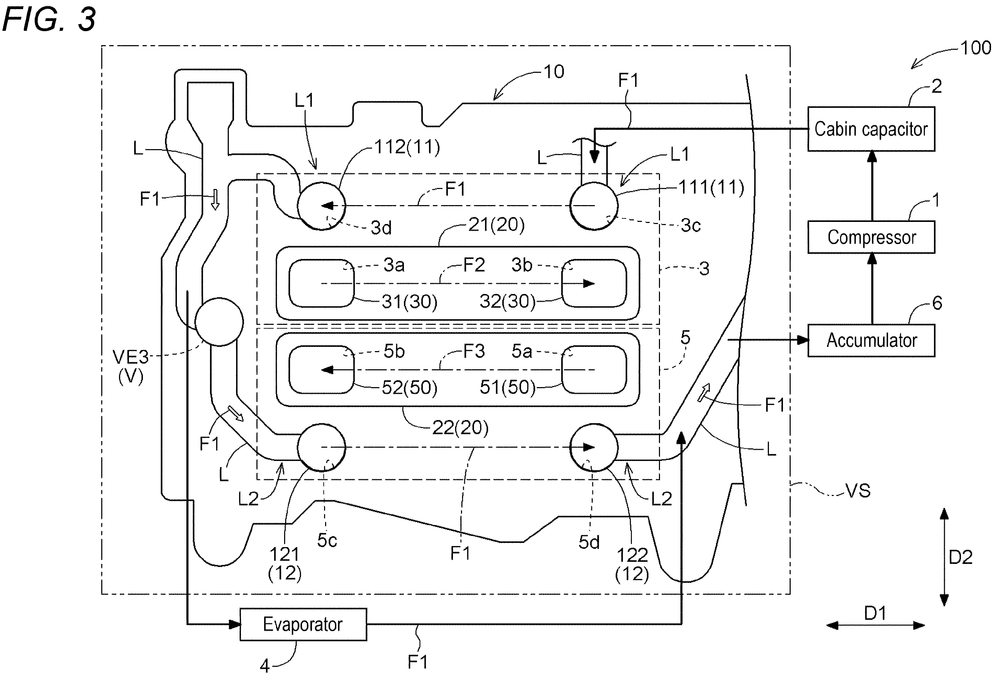

First, a refrigerant circuit C mounted on a vehicle such as an electric vehicle, a hybrid electric vehicle, or a fuel cell electric vehicle is described with reference to FIG. 1. The refrigerant circuit C is formed of a refrigerant flow path L (an example of a fluid flow path) in which a refrigerant F1 (an example of a first fluid) for cooling and heating that adjusts temperature of an interior of the vehicle circulates. The refrigerant F1 is, for example, hydrofluorocarbon (HFC), hydrofluoroolefin (HFO) or the like. Note that, the refrigerant flow path L is provided in a manifold 100 (refer to FIG. 3) mounted on the vehicle.

As illustrated in FIG. 1, the refrigerant circuit C includes a compressor 1 (compressor), a cabin capacitor 2, a water-cooled capacitor 3 (condenser), an evaporator 4 (evaporator), a chiller 5 (evaporator), an accumulator 6, and a valve V. The compressor 1, the cabin capacitor 2, the water-cooled capacitor 3, the evaporator 4, the chiller 5, the accumulator 6, and the valve V are connected to one another via the refrigerant flow path L.

The valve V includes an on-off valve V1 provided between the water-cooled capacitor 3 and the accumulator 6. The valve V further includes a first expansion valve VE1 provided between the cabin capacitor 2 and the water-cooled capacitor 3, a second expansion valve VE2 provided between the water-cooled capacitor 3 and the evaporator 4, and a third expansion valve VE3 provided between the water-cooled capacitor 3 and the chiller 5.

The on-off valve V1 controls (circulates or blocks) a flow of the refrigerant F1 between the water-cooled capacitor 3 and the accumulator 6. In an opened state of the on-off valve V1, the refrigerant F1 flows through the compressor 1, the cabin capacitor 2, the first expansion valve VE1, the water-cooled capacitor 3, the on-off valve V1, the accumulator 6, and the compressor 1 in this order. Hereinafter, the refrigerant circuit C in which the compressor 1, the cabin capacitor 2, the water-cooled capacitor 3, the on-off valve V1, and the accumulator 6 are provided is referred to as a "main circuit Cm".

The first expansion valve VE1, the second expansion valve VE2, and the third expansion valve VE3 expand the refrigerant F1 to adjust a pressure of the refrigerant F1.

In an opened state of the second expansion valve VE2, the refrigerant F1 flows through the second expansion valve VE2 and the evaporator 4 in this order, and then flows into the main circuit Cm between the on-off valve V1 and the accumulator 6. Hereinafter, the refrigerant circuit C that branches from the main circuit Cm and is provided with the second expansion valve VE2 and the evaporator 4 is referred to as a "first branch circuit Cb1". The second expansion valve VE2 is controlled (to circulate or block), for example, when the temperature in the vehicle interior is adjusted.

In an opened state of the third expansion valve VE3, the refrigerant F1 flows through the third expansion valve VE3 and the chiller 5 in this order, and then flows into the main circuit Cm between the on-off valve V1 and the accumulator 6. Hereinafter, the refrigerant circuit C that branches from the main circuit Cm and is provided with the third expansion valve VE3 and the chiller 5 is referred to as a "second branch circuit Cb2". The third expansion valve VE3 is controlled (to circulate or block), for example, when temperature of a battery is adjusted.

The compressor 1 compresses the refrigerant F1 to turn the refrigerant F1 into a high-pressure gas. The refrigerant F1 compressed by the compressor 1 is sent to the cabin capacitor 2, exchanges heat with air in the vehicle interior during heating operation, and flows into the water-cooled capacitor 3 (an example of a first heat exchanger) via the first expansion valve VE1.

In the water-cooled capacitor 3, a first heating medium F2 (an example of a second fluid) circulating in a circuit (for example, a cooling circuit for cooling an electronic circuit or the like mounted on the vehicle) different from the refrigerant circuit C circulates. The first heating medium F2 is cooling water such as a long life coolant (LLC), insulating oil such as paraffins, and a refrigerant such as hydrofluorocarbon (HFC) or hydrofluoroolefin (HFO).

The refrigerant F1 that flows into the water-cooled capacitor 3 exchanges heat with the first heating medium F2 that circulates in the water-cooled capacitor 3 (temperature lowers by heat loss) to become high-pressure liquid. Hereinafter, temperature of the refrigerant F1 that flows into the water-cooled capacitor 3 is referred to as "first heating medium temperature", and temperature of the refrigerant F1 that flows out of the water-cooled capacitor 3 is referred to as "second heating medium temperature". Note that, the first heating medium temperature is, for example, 80 degrees to 90 degrees, and the second heating medium temperature is, for example, 60 degrees to 85 degrees.

The refrigerant F1 that flows into the second expansion valve VE2 is expanded to be in a state in which liquid and gas are mixed (atomized state), and flows into the evaporator 4. In the evaporator 4, the refrigerant F1 exchanges heat with air introduced from outside (temperature rises by obtained heat) to vaporize. The refrigerant F1 after the heat exchange in the evaporator 4 flows into the accumulator 6, and the liquid contained in the refrigerant F1 is separated. The refrigerant F1 from which the liquid is separated returns to the compressor 1.

The refrigerant F1 that flows into the third expansion valve VE3 is expanded to be in a state in which liquid and gas are mixed (atomized state), and flows into the chiller 5 (an example of a second heat exchanger). In the chiller 5, a second heating medium F3 (an example of a second fluid) circulating in another circuit (for example, a cooling circuit for cooling a battery mounted on the vehicle) different from the refrigerant circuit C circulates. The second heating medium F3 is cooling water such as a long life coolant (LLC), insulating oil such as paraffins, and a refrigerant such as hydrofluorocarbon (HFC) or hydrofluoroolefin (HFO).

The refrigerant F1 that flows into the chiller 5 exchanges heat with the second heating medium F3 that circulates in the chiller 5 (temperature rises by obtained heat) to vaporize. The refrigerant F1 after the heat exchange in the chiller 5 flows into the accumulator 6, and the liquid contained in the refrigerant F1 is separated. The refrigerant F1 from which the liquid is separated returns to the compressor 1. Hereinafter, temperature of the refrigerant F1 that flows into the chiller 5 is referred to as "third heating medium temperature", and temperature of the refrigerant F1 that flows out of the chiller 5 is referred to as "fourth heating medium temperature". The third heating medium temperature and the fourth heating medium temperature are, for example, 15 degrees to 25 degrees.

### [Configuration of Manifold]

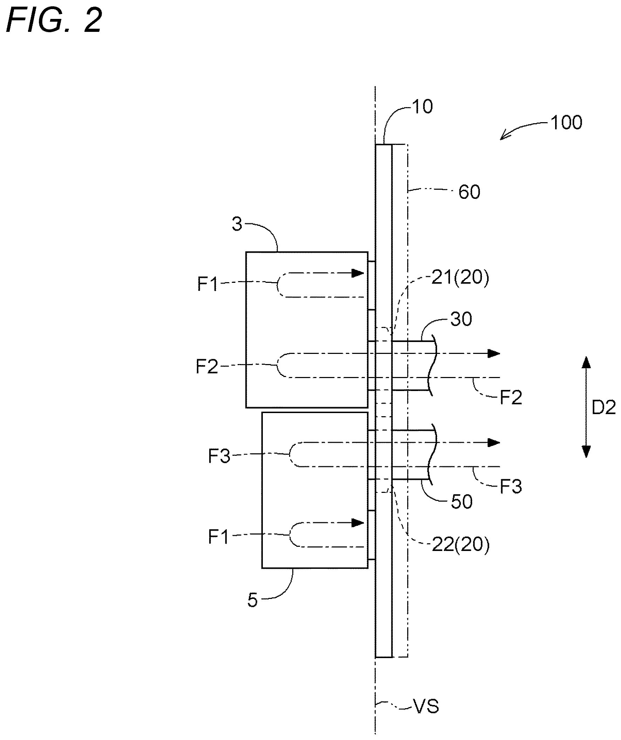

Subsequently, a configuration of the manifold 100 provided with the refrigerant flow path L is described with reference to FIGS. 2 and 3. FIG. 2 is a diagram illustrating the configuration of the manifold 100 and the vicinity thereof, and FIG. 3 is a diagram of the manifold illustrated in FIG. 2 as seen in another direction. Note that, in FIG. 2, only a part of the vicinity of the manifold 100 (the water-cooled capacitor 3 and the chiller 5) is illustrated. In FIG. 3, only a part of the refrigerant flow path L included in the manifold 100 (a flow path housing 10) is illustrated. Hereinafter, a plane including a direction in which the refrigerant flow path L extends is referred to as a "virtual plane VS".

As illustrated in FIG. 2, the manifold 100 includes the flow path housing 10 and a plate member 60. The plate member 60 is a plate-like member including a flat surface. The flow path housing 10 includes the refrigerant flow path L. The flow path housing 10 is joined to the plate member 60 in such a manner that, for example, a surface on which the refrigerant flow path L is provided and a flat surface of the plate member 60 are opposed to each other. Accordingly, the refrigerant flow path L is formed inside the manifold 100.

### [Flow Path Housing]

The flow path housing 10 is formed by, for example, molding metal containing aluminum (for example, an aluminum alloy).

As illustrated in FIG. 3, outside the flow path housing 10, the compressor 1, the cabin capacitor 2, the water-cooled capacitor 3, the evaporator 4, the chiller 5, and the accumulator 6 are provided.

The water-cooled capacitor 3 and the chiller 5 are provided at positions overlapping the flow path housing 10 as seen in a direction orthogonal to the virtual plane VS (refer also to FIG. 2).

### [Cast Hole]

As illustrated in FIGS. 2 and 3, in the flow path housing 10, a cast hole 20 (an example of an opening) through which a pipe connected to each of the water-cooled capacitor 3 and the chiller 5 is inserted is formed. The cast hole 20 is formed by molding using a mold designed in advance. In the present embodiment, the flow path housing 10 is provided with two cast holes 20. Hereinafter, one of the two cast holes 20 is referred to as a "first cast hole 21" (an example of a first opening), and the other is referred to as a "second cast hole 22" (an example of a second opening). Note that, in the plate member 60, through holes (not illustrated) penetrating the plate member 60 are formed at corresponding positions of the two cast holes 20.

A first circulation pipe 30 in which the first heating medium F2 that exchanges heat with the refrigerant F1 in the water-cooled capacitor 3 circulates is inserted into the first cast hole 21. The first circulation pipe 30 is connected to the water-cooled capacitor 3. As illustrated in FIG. 3, the first circulation pipe 30 includes a first inflow pipe 31 connected to a first heating medium inflow port 3a being an inflow port of the first heating medium F2 of the water-cooled capacitor 3, the inflow pipe in which the first heating medium F2 flowing into the water-cooled capacitor 3 circulates, and a first outflow pipe 32 connected to a first heating medium outflow port 3b being an outflow port of the first heating medium F2 of the water-cooled capacitor 3 in which the first heating medium F2 flowing out of the water-cooled capacitor 3 circulates.

That is, the first inflow pipe 31 and the first outflow pipe 32 are inserted together into the first cast hole 21. The first cast hole 21 has a shape and a size capable of accommodating the two pipes of the first inflow pipe 31 and the first outflow pipe 32 together. Note that, in the present embodiment, the water-cooled capacitor 3 is disposed in such a manner that the first heating medium inflow port 3a and the first heating medium outflow port 3b overlap the first cast hole 21 as seen in a direction orthogonal to the virtual plane VS.

The first cast hole 21 is a long hole, and the first inflow pipe 31 and the first outflow pipe 32 are inserted into the first cast hole 21 so as to be aligned in a longitudinal direction of the first cast hole 21.

A second circulation pipe 50 in which the second heating medium F3 that exchanges heat with the refrigerant F1 in the chiller 5 circulates is inserted into the second cast hole 22. The second circulation pipe 50 is connected to the chiller 5. The second circulation pipe 50 includes a second inflow pipe 51 connected to a second heating medium inflow port 5a being an inflow port of the second heating medium F3 of the chiller 5 in which the second heating medium F3 flowing into the chiller 5 circulates, and a second outflow pipe 52 connected to a second heating medium outflow port 5b being an outflow port of the second heating medium F3 of the chiller 5 in which the second heating medium F3 flowing out of the chiller 5 circulates.

That is, the second inflow pipe 51 and the second outflow pipe 52 are inserted together into the second cast hole 22. The second cast hole 22 has a shape and a size capable of accommodating the two pipes of the second inflow pipe 51 and the second outflow pipe 52 together. Note that, in the present embodiment, the chiller 5 is disposed in such a manner that the second heating medium inflow port 5a and the second heating medium outflow port 5b overlap the second cast hole 22 as seen in a direction orthogonal to the virtual plane VS.

The second cast hole 22 is a long hole, and the second inflow pipe 51 and the second outflow pipe 52 are inserted into the second cast hole 22 so as to be aligned in a longitudinal direction of the second cast hole 22.

The longitudinal direction of the first cast hole 21 is parallel with the longitudinal direction of the second cast hole 22. The longitudinal direction of the first cast hole 21 and the longitudinal direction of the second cast hole 22 correspond to a metal flow direction during molding of the flow path housing 10. Hereinafter, a direction in the longitudinal direction of each of the first cast hole 21 and the second cast hole 22 is referred to as a "first direction D1".

The first cast hole 21 and the second cast hole 22 are provided adjacent to each other in a direction orthogonal to the first direction D1. Hereinafter, the direction orthogonal to the first direction D1 is referred to as a "second direction D2".

In other words, the first circulation pipe 30 (the first inflow pipe 31 and the first outflow pipe 32) connected to the water-cooled capacitor 3 and the second circulation pipe 50 (the second inflow pipe 51 and the second outflow pipe 52) connected to the chiller 5 are adjacent to each other in the second direction D2. Note that, in the present embodiment, the water-cooled capacitor 3 and the chiller 5 are disposed in such a manner that the first heating medium inflow port 3a and the first heating medium outflow port 3b of the water-cooled capacitor 3 to which the first circulation pipe 30 is connected are adjacent to the second heating medium inflow port 5a and the second heating medium outflow port 5b of the chiller 5 to which the second circulation pipe 50 is connected in the second direction D2.

### [Refrigerant Flow Path]

The refrigerant flow path L includes a first opposing portion L1 and a second opposing portion L2 opposed to each other via the cast hole 20 in the second direction D2. In the present embodiment, the first opposing portion L1 includes a first flow path side outflow port 111 (an example of a first outflow port) through which the refrigerant F1 flows out of the refrigerant flow path L toward the water-cooled capacitor 3, and a first flow path side inflow port 112 (an example of a first inflow port) through which the refrigerant F1 flows in from the water-cooled capacitor 3, and the second opposing portion L2 includes a second flow path side outflow port 121 (an example of a second outflow port) through which the refrigerant F1 flows out of the refrigerant flow path L toward the chiller 5, and a second flow path side inflow port 122 (an example of a second inflow port) through which the refrigerant F1 flows in from the chiller 5.

That is, the first flow path side outflow port 111 and the first flow path side inflow port 112, and the second flow path side outflow port 121 and the second flow path side inflow port 122 are provided so as to be separated from each other across the first cast hole 21 and the second cast hole 22. Note that, the first flow path side outflow port 111, the first flow path side inflow port 112, the second flow path side outflow port 121, and the second flow path side inflow port 122 are formed in the flow path housing 10.

The first flow path side outflow port 111 is connected to a first refrigerant inflow port 3c of the water-cooled capacitor 3, and the refrigerant F1 flowing out of the first flow path side outflow port 111 flows into the water-cooled capacitor 3 (first refrigerant inflow port 3c). The first flow path side inflow port 112 is connected to a first refrigerant outflow port 3d of the water-cooled capacitor 3, and the refrigerant F1 flowing out of the water-cooled capacitor 3 (first refrigerant outflow port 3d) flows into the refrigerant flow path L via the first flow path side inflow port 112.

In the present embodiment, the first flow path side outflow port 111 and the first flow path side inflow port 112 are provided so as to be aligned in the first direction D1. The first flow path side outflow port 111 and the first flow path side inflow port 112 are provided on a side farther from the chiller 5 than the first cast hole 21. Hereinafter, the first flow path side outflow port 111 and the first flow path side inflow port 112 are sometimes collectively referred to as a "first flow path side connector 11".

The second flow path side outflow port 121 is connected to a second refrigerant inflow port 5c of the chiller 5, and the refrigerant F1 flowing out of the second flow path side outflow port 121 of the refrigerant flow path L flows into the chiller 5 (second refrigerant inflow port 5c). The second flow path side inflow port 122 is connected to a second refrigerant outflow port 5d of the chiller 5, and the refrigerant F1 flowing out of the chiller 5 (second refrigerant outflow port 5d) flows into the refrigerant flow path L via the second flow path side inflow port 122.

In the present embodiment, the second flow path side outflow port 121 and the second flow path side inflow port 122 are provided so as to be aligned in the first direction D1. The second flow path side outflow port 121 and the second flow path side inflow port 122 are provided on a side farther from the water-cooled capacitor 3 than the second cast hole 22. Hereinafter, the second flow path side outflow port 121 and the second flow path side inflow port 122 are sometimes collectively referred to as a "second flow path side connector 12".

In the present embodiment, the second flow path side outflow port 121 is opposed to the first flow path side inflow port 112, and the second flow path side inflow port 122 is opposed to the first flow path side outflow port 111 via the first cast hole 21 and the second cast hole 22 in the second direction D2. With these configurations, a portion of the refrigerant flow path L in which the refrigerant F1 flowing from the water-cooled capacitor 3 toward the chiller 5 circulates extends along an outer edge of a region surrounding the first cast hole 21 and the second cast hole 22. Accordingly, heat exchange between the refrigerants F1 at different temperatures can be suppressed.

### [Action Effect of Embodiment]

As described above, according to the present embodiment, the cast hole 20 functioning as a heat insulating space is provided in the flow path housing 10 including the refrigerant flow path L. Therefore, the heat exchange between the refrigerants F1 at different temperatures can be suppressed. The cast hole 20 also has a function as an opening through which an inflow pipe through which the heating medium (the first heating medium F2 and the second heating medium F3) that is to exchange heat with the refrigerant F1 circulating in the refrigerant flow path L flows into the heat exchanger (the water-cooled capacitor 3 and/or the chiller 5) and an outflow pipe through which the heating medium flows out of the heat exchanger are inserted. That is, the cast hole 20 has both a function as the heat insulating space and a function as the opening through which the inflow pipe and the outflow pipe in which the heating medium circulates are inserted. As a result, it is not necessary to provide the opening as the heat insulating space and the opening through which the inflow pipe and the outflow pipe in which the heating medium circulates are inserted in the flow path housing 10, and space saving of the flow path housing 10 can be achieved. This can reduce a weight and a cost of the flow path housing 10.

According to the present embodiment, the first cast hole 21 through which the first inflow pipe 31 and the first outflow pipe 32 connected to the water-cooled capacitor 3 are inserted, and the second cast hole 22 through which the second inflow pipe 51 and the second outflow pipe 52 connected to the chiller 5 are inserted are adjacent to each other in the first direction D1. That is, the first flow path side connector 11 being a connecting portion of the refrigerant flow path L with the water-cooled capacitor 3, and the second flow path side connector 12 being a connecting portion of the refrigerant flow path L with the chiller 5 can be provided so as to be separated from each other. Accordingly, the heat exchange between the refrigerants F1 at different temperatures can be suppressed.

According to the present embodiment, the first cast hole 21 is the long hole, so that the first inflow pipe 31 and the first outflow pipe 32 are arranged so as to be aligned in a longitudinal direction of the first cast hole 21. Similarly, the second cast hole 22 is the long hole, so that the second inflow pipe 51 and the second outflow pipe 52 are arranged so as to be aligned in a longitudinal direction of the second cast hole 22. The longitudinal direction of the first cast hole 21 and the longitudinal direction of the second cast hole 22 are provided in parallel with each other, so that the first flow path side connector 11 being the connecting portion of the refrigerant flow path L with the water-cooled capacitor 3, and the second flow path side connector 12 being the connecting portion of the refrigerant flow path L with the chiller 5 can be provided so as to be separated from each other. Accordingly, the heat exchange between the first fluids at different temperatures can be suppressed.

In the present embodiment, each of the longitudinal direction of the first cast hole 21 and the longitudinal direction of the second cast hole 22 corresponds to the metal flow direction. For example, in a case of a configuration in which a heat insulating hole for suppressing the heat exchange between the refrigerants F1 flowing through the refrigerant flow path L is inclined with respect to the metal flow direction, misrun might occur during molding, leading to deterioration in product quality. In order to suppress the occurrence of misrun, a columnar portion might be provided so as to straddle the heat insulating hole in the metal flow direction; however, in the configuration in which the columnar portion is provided so as to straddle the heat insulating hole in the metal flow direction, heat exchange might occur via the columnar portion, and as a result, there is a possibility that efficiency of heat exchange is deteriorated and electric consumption is deteriorated. In the present embodiment, the longitudinal direction of each of the first cast hole 21 and the second cast hole 22 corresponds to the metal flow direction during the molding of the flow path housing 10. Therefore, during the molding of the flow path housing 10, the occurrence of misrun can be suppressed. It is not necessary to provide the columnar portion in the metal flow direction, and it is possible to avoid deterioration in efficiency of heat exchange, deterioration in electric consumption and the like.

According to the present embodiment, the first flow path side connector 11 (the first flow path side outflow port 111 and the first flow path side inflow port 112) being the connecting portion of the refrigerant flow path L with the water-cooled capacitor 3, and the second flow path side connector 12 (the second flow path side outflow port 121 and the second flow path side inflow port 122) being the connecting portion of the refrigerant flow path L with the chiller 5 are opposed to each other via the first cast hole 21 and the second cast hole 22. That is, the first flow path side connector 11 (the first flow path side outflow port 111 and the first flow path side inflow port 112), and the second flow path side connector 12 (the second flow path side outflow port 121 and the second flow path side inflow port 122) are provided so as to be separated from each other across the first cast hole 21 and the second cast hole 22. Accordingly, the heat exchange between the first fluids at different temperatures can be suppressed.

### [Another Embodiment]

The present disclosure may be configured as follows in addition to the above-described embodiment (one having the same function as that of the embodiment is denoted by the same number and reference numeral as that of the embodiment).

(1) In the embodiment described above, a case where two cast holes 20 (openings) are formed in the flow path housing 10 has been described; however, the number of cast holes 20 formed in the flow path housing 10 is not limited to two, and may be one or three or more.
(2) In the embodiment described above, a case where the first cast hole 21 is the long hole has been described; however, the first cast hole 21 is not limited to the long hole as long as the first inflow pipe 31 and the first outflow pipe 32 can be inserted together. Similarly, the second cast hole 22 is not limited to the long hole as long as the second inflow pipe 51 and the second outflow pipe 52 can be inserted together.
(3) In the embodiment described above, a case where the longitudinal direction of the first cast hole 21 and the longitudinal direction of the second cast hole 22 are parallel with each other has been described; however, the longitudinal direction of the first cast hole 21 and the longitudinal direction of the second cast hole 22 are not necessarily parallel with each other.
(4) In the present embodiment described above, a case where the first opposing portion L1 includes the first flow path side connector 11 (the first flow path side outflow port 111 and the first flow path side inflow port 112) and the second opposing portion L2 includes the second flow path side connector 12 (the second flow path side outflow port 121 and the second flow path side inflow port 122), the first opposing portion L1 and the second opposing portion L2 opposed to each other via the cast hole 20 has been described as an example; however, the first opposing portion L1 is only required to include at least one of the first flow path side outflow port 111 and the first flow path side inflow port 112, and may include only the first flow path side outflow port 111 or the first flow path side inflow port 112. Similarly, the second opposing portion L2 is only required to include at least one of the second flow path side outflow port 121 and the second flow path side inflow port 122, and may include only the second flow path side outflow port 121 or the second flow path side inflow port 122.
(5) Positions of the first inflow pipe 31 and the first outflow pipe 32 in the first direction D1 can be exchanged with each other. Similarly, positions of the second inflow pipe 51 and the second outflow pipe 52 in the first direction D1 can be exchanged with each other.
(6) In the embodiment described above, a case where a material of the flow path housing 10 is metal containing aluminum has been described; however, the material of the flow path housing 10 may contain metal other than aluminum, may be resin or the like.
(7) In the embodiment described above, the water-cooled capacitor 3 has been described as an example of the first heat exchanger; however, the first heat exchanger may be a heat exchanger other than the water-cooled capacitor 3. Similarly, the second heat exchanger may be a heat exchanger other than the chiller 5.
(8) In the embodiment described above, the configuration in which the refrigerant circuit C (the second branch circuit Cb2) is provided with the chiller 5 has been described as an example; however, the refrigerant circuit C may include a battery cooler instead of the chiller 5.
(9) In the embodiment described above, the refrigerant F1 has been described as an example of the cooling fluid; however, the cooling fluid may be a fluid other than the refrigerant F1, for example, cooling water such as a long life coolant (LLC), insulating oil such as paraffin or the like.
(10) In the embodiment described above, a case where the water-cooled capacitor 3 and the chiller 5 have a rectangular shape as seen in the direction orthogonal to the virtual plane VS has been described; however, the water-cooled capacitor 3 and the chiller 5 are not limited to the rectangular shape, and can be appropriately changed. Note that, the virtual plane VS is a plane including the first direction D1 and the second direction D2.
(11) The size of the first cast hole 21 in the longitudinal direction and the size of the second cast hole 22 in the longitudinal direction may be equal to each other or not. A distance between the first cast hole 21 and the second cast hole 22 in the second direction D2 may be smaller than at least one of the size in the longitudinal direction of the first cast hole 21 and the size in the longitudinal direction of the second cast hole 22.
(12) The expressions "parallel", "orthogonal" and the like in the embodiment described above are not limited to those strictly representing "parallel", "orthogonal" and the like, and include those to the extent that equivalent functions can be obtained.

In the embodiment described above, the following configuration is conceived.
(1) A manifold 100 according to the present disclosure is characterized in including a flow path housing 10 including a refrigerant flow path L (fluid flow path) in which a refrigerant F1 (first fluid) circulates, in which a cast hole 20 (opening) through which a first inflow pipe 31 and a second inflow pipe 51 (inflow pipes) and a first outflow pipe 32 and a second outflow pipe 52 (outflow pipes) in which a first heating medium F2 and a second heating medium F3 (second fluids) that exchange heat with the refrigerant F1 (first fluid) in a water-cooled capacitor 3 and a chiller 5 (heat exchangers) circulate are inserted together is formed in the flow path housing 10, and the cast hole 20 (opening) functions as a heat insulating space.

According to this configuration, the cast hole 20 (opening) functioning as the heat insulating space is provided in the flow path housing 10 including the refrigerant flow path L (fluid flow path) in which the refrigerant F1 (first fluid) circulates. Temperature of the refrigerant F1 (first fluid) changes in the process of circulating in the refrigerant flow path L (fluid flow path); however, according to this configuration, since the flow path housing 10 is provided with the cast hole 20 (opening) as the heat insulating space, heat exchange between the refrigerants F1 (first fluids) at different temperatures can be suppressed.

(2) In the manifold 100 according to (1), the heat insulating space can be disposed between the refrigerants F1 (first fluids) at different temperatures.

According to this configuration, since the heat insulating space is disposed between the refrigerants F1 (first fluids) at different temperatures, the heat exchange between the refrigerants F1 (first fluids) at different temperatures is suppressed.

(3) In the manifold 100 according to (1) or (2), the heat exchanger may include the water-cooled capacitor 3 (first heat exchanger) and the chiller 5 (second heat exchanger), the refrigerant flow path L (fluid flow path) may include a first flow path side outflow port 111 (first outflow port) through which the refrigerant F1 (first fluid) flows out toward the water-cooled capacitor 3 (first heat exchanger) and a second flow path side inflow port 122 (second inflow port) through which the refrigerant F1 (first fluid) flows in from the chiller 5 (second heat exchanger), and the heat insulating space may be disposed between the first flow path side outflow port 111 (first outflow port) and the second flow path side inflow port 122 (second inflow port).

According to this configuration, the heat insulating space is disposed between the first flow path side outflow port 111 (first outflow port) through which the refrigerant F1 (first fluid) flows out toward the water-cooled capacitor 3 (first heat exchanger) and the second flow path side inflow port 122 (second inflow port) through which the refrigerant F1 (first fluid) flows in from the chiller 5 (second heat exchanger), so that the heat exchange between the refrigerants F1 (first fluids) at different temperatures can be suppressed.

(4) In the manifold 100 according to any one of (1) to (3), the heat exchanger may include the water-cooled capacitor 3 (first heat exchanger) and the chiller 5 (second heat exchanger), the refrigerant flow path L (fluid flow path) may include the first flow path side inflow port 112 (first inflow port) through which the refrigerant F1 (first fluid) flows from the water-cooled capacitor 3 (first heat exchanger) and the second flow path side outflow port 121 (second outflow port) through which the refrigerant F1 (first fluid) flows out toward the chiller 5 (second heat exchanger), and the heat insulating space may be disposed between the first flow path side inflow port 112 (first inflow port) and the second flow path side outflow port 121 (second outflow port).

According to this configuration, the heat insulating space is disposed between the first flow path side inflow port 112 (first inflow port) through which the refrigerant F1 (first fluid) flows in from the water-cooled capacitor 3 (first heat exchanger) and the second flow path side outflow port 121 (second outflow port) through which the refrigerant F1 (first fluid) flows out toward the chiller 5 (second heat exchanger), so that heat exchange between the refrigerants F1 (first fluids) at different temperatures can be suppressed.

(5) In the manifold 100 according to any one of (1) to (4), the heat exchanger may include the water-cooled capacitor 3 (first heat exchanger) and the chiller 5 (second heat exchanger), the water-cooled capacitor 3 (first heat exchanger) may be connected to the first inflow pipe 31 as the inflow pipe and the first outflow pipe 32 as the outflow pipe, the chiller 5 (second heat exchanger) may be connected to the second inflow pipe 51 as the inflow pipe and the second outflow pipe 52 as the outflow pipe, the cast hole 20 (opening) may include the first cast hole 21 (first opening) through which the first inflow pipe 31 and the first outflow pipe 32 are inserted together and the second cast hole 22 (second opening) through which the second inflow pipe 51 and the second outflow pipe 52 are inserted together, and the first cast hole 21 (first opening) and the second cast hole 22 (second opening) may be adjacent to each other.

According to this configuration, the first cast hole 21 (first opening) through which the first inflow pipe 31 and the first outflow pipe 32 connected to the water-cooled capacitor 3 (first heat exchanger) are inserted, and the second cast hole 22 (second opening) through which the second inflow pipe 51 and the second outflow pipe 52 connected to the chiller 5 (second heat exchanger) are inserted are adjacent to each other. That is, the connection portion of the refrigerant flow path L (fluid flow path) through which the refrigerant F1 (first fluid) flows with the water-cooled capacitor 3 (first heat exchanger) and the connection portion of the refrigerant flow path L (fluid flow path) through which the refrigerant F1 (first fluid) flows with the chiller 5 (second heat exchanger) can be provided so as to be separated from each other. Accordingly, the heat exchange between the refrigerants F1 (first fluids) at different temperatures can be suppressed.

(6) In the manifold 100 according to (5), each of the first cast hole 21 (first opening) and the second cast hole 22 (second opening) is a long hole, and a longitudinal direction of the first cast hole 21 (first opening) and a longitudinal direction of the second cast hole 22 (second opening) may be parallel with each other.

According to this configuration, the first cast hole 21 (first opening) is the long hole, so that the first inflow pipe 31 and the first outflow pipe 32 are arranged so as to be aligned in the longitudinal direction of the first cast hole 21 (first opening). Similarly, the second cast hole 22 (second opening) is the long hole, so that the second inflow pipe 51 and the second outflow pipe 52 are arranged so as to be aligned in the longitudinal direction of the second cast hole 22 (second opening). The longitudinal direction of the first cast hole 21 (first opening) and the longitudinal direction of the second cast hole 22 (second opening) are provided in parallel with each other, so that the connection portion of the refrigerant flow path L (fluid flow path) with the water-cooled capacitor 3 (first heat exchanger) and the connection portion of the refrigerant flow path L (fluid flow path) with the chiller 5 (second heat exchanger) can be provided so as to be separated from each other. Accordingly, the heat exchange between the refrigerants F1 (first fluids) at different temperatures can be suppressed.

(7) In the manifold 100 according to (5) or (6), the refrigerant flow path L (fluid flow path) may include a first opposing portion L1 and a second opposing portion L2 opposed to each other via the cast hole 20 (opening), the first opposing portion L1 may include at least one of the first flow path side outflow port 111 (first outflow port) through which the refrigerant F1 (first fluid) flows out toward the water-cooled capacitor 3 (first heat exchanger) and the first flow path side inflow port 112 (first inflow port) through which the refrigerant F1 (first fluid) flows in from the water-cooled capacitor 3 (first heat exchanger), and the second opposing portion L2 may include at least one of the second flow path side outflow port 121 (second outflow port) through which the refrigerant F1 (first fluid) after the heat exchange in the water-cooled capacitor 3 (first heat exchanger) flows out toward the chiller 5 (second heat exchanger) and the second flow path side inflow port 122 (second inflow port) through which the refrigerant F1 (first fluid) flows in from the chiller 5 (second heat exchanger).

According to this configuration, the first opposing portion L1 including at least one of the first flow path side outflow port 111 (first outflow port) through which the refrigerant F1 (first fluid) flows out toward the water-cooled capacitor 3 (first heat exchanger) and the first flow path side inflow port 112 (first inflow port) through which the refrigerant F1 (first fluid) flows in from the water-cooled capacitor 3 (first heat exchanger), and the second opposing portion L2 including at least one of the second flow path side outflow port 121 (second outflow port) through which the refrigerant F1 (first fluid) after the heat exchange in the water-cooled capacitor 3 (first heat exchanger) flows out toward the chiller 5 (second heat exchanger) and the second flow path side inflow port 122 (second inflow port) through which the refrigerant F1 (first fluid) flows in from the chiller 5 (second heat exchanger) are opposed to each other via the cast hole 20 (opening). That is, the first opposing portion L1 and the second opposing portion L2 are provided so as to be separated from each other across the cast hole 20 (opening). Accordingly, the heat exchange between the refrigerants F1 (first fluids) at different temperatures can be suppressed.

### INDUSTRIAL APPLICABILITY

The present disclosure can be used for a manifold.

### REFERENCE SIGNS LIST

3: Water-cooled capacitor (first heat exchanger), 5: Chiller (second heat exchanger), 10: Flow path housing, 20: Cast hole (opening), 21: First cast hole (first opening), 22: Second cast hole (second opening), 31: First inflow pipe (inflow pipe), 32: First outflow pipe (outflow pipe), 51: Second inflow pipe (inflow pipe), 52: Second outflow pipe (outflow pipe), 100: Manifold, 111: First flow path side outflow port (first outflow port), 112: First flow path side inflow port (first inflow port), 121: Second flow path side outflow port (second outflow port), 122: Second flow path side inflow port (second inflow port), F1: Refrigerant (first fluid), F2: First heating medium (second fluid), F3: Second heating medium (second fluid), L: Fluid flow path (refrigerant flow path), L1: First opposing portion, and L2: Second opposing portion

## Claims

1. A manifold comprising:
a flow path housing including a fluid flow path in which a first fluid circulates, wherein
an opening through which an inflow pipe and an outflow pipe in which a second fluid that exchanges heat with the first fluid in a heat exchanger circulates are inserted together is formed in the flow path housing, and the opening functions as a heat insulating space.

2. The manifold according to claim 1, wherein
the heat insulating space is disposed between first fluids at different temperatures.

3. The manifold according to claim 1 or 2, wherein
the heat exchanger includes a first heat exchanger and a second heat exchanger,
the fluid flow path includes a first outflow port through which the first fluid flows out toward the first heat exchanger, and a second inflow port through which the first fluid flows in from the second heat exchanger, and
the heat insulating space is disposed between the first outflow port and the second inflow port.

4. The manifold according to claim 1 or 2, wherein
the heat exchanger includes a first heat exchanger and a second heat exchanger,
the fluid flow path includes a first inflow port through which the first fluid flows in from the first heat exchanger, and a second outflow port through which the first fluid flows out toward the second heat exchanger, and
the heat insulating space is disposed between the first inflow port and the second outflow port.

5. The manifold according to claim 1, wherein
the heat exchanger includes a first heat exchanger and a second heat exchanger,
a first inflow pipe as the inflow pipe and a first outflow pipe as the outflow pipe are connected to the first heat exchanger,
a second inflow pipe as the inflow pipe and a second outflow pipe as the outflow pipe are connected to the second heat exchanger,
the opening includes a first opening through which the first inflow pipe and the first outflow pipe are inserted together, and a second opening through which the second inflow pipe and the second outflow pipe are inserted together, and
the first opening and the second opening are adjacent to each other.

6. The manifold according to claim 5, wherein
each of the first opening and the second opening is a long hole, and
a longitudinal direction of the first opening is parallel with a longitudinal direction of the second opening.

7. The manifold according to claim 5 or 6, wherein
the fluid flow path includes a first opposing portion and a second opposing portion opposed to each other via the opening,
the first opposing portion includes at least one of a first outflow port through which the first fluid flows out toward the first heat exchanger and a first inflow port through which the first fluid flows in from the first heat exchanger, and
the second opposing portion includes at least one of a second outflow port through which the first fluid after heat exchange in the first heat exchanger flows out toward the second heat exchanger and a second inflow port through which the first fluid flows in from the second heat exchanger.
